# EUROPÄISCHE PATENTSCHRIFT

(11) **EP 1 838 189 B1**
(45) Veröffentlichungstag und Bekanntmachung des Hinweises auf die Patenterteilung: **16.02.2011**
(21) Anmeldenummer: 05731881.8
(22) Anmeldetag: 05.04.2005
(51) Int. Cl.: A47J 43/25

(54) **VORRICHTUNG MIT HALTER ZUM ZERKLEINERN VON NAHRUNGSMITTELN**
DEVICE HAVING A HOLDER FOR GRATING/SLICING FOODSTUFFS
DISPOSITIF AVEC UN SUPPORT SERVANT A FRAGMENTER DES PRODUITS ALIMENTAIRES

(30) Priorität: 17.01.2005 DE 102005002328; 25.01.2005 US 646925 P; 04.02.2005 DE 102005005510; 09.02.2005 US 651254 P
(43) Veröffentlichungstag der Anmeldung: 03.10.2007
(73) Patentinhaber: Leifheit AG, 56377 Nassau/Lahn (DE)
(72) Erfinder: KLOTZ, Markus, 56357 Hainau (DE); SCHRAMM, Benjamin, 65558 Eppenrod (DE); GROSS, Christian, 57250 Netphen (DE)
(74) Vertreter: Bungartz, Klaus Peter
(86) Internationale Anmeldenummer: PCT/EP2005/003566
(87) Internationale Veröffentlichungsnummer: WO 2006/074704

(56) Entgegenhaltungen:
- EP-A- 0 412 489
- EP-A- 0 470 029
- DE-C- 329 251
- DE-U1- 29 914 149
- US-A- 3 583 454

## Beschreibung

Die Erfindung betrifft eine Vorrichtung gemäß dem Oberbegriff von Anspruch 1 mit einem Halter für Nahrungsmittel mit zumindest einem Aufsetzelement, das eine Grundebene definiert und zur Herstellung einer mechanischen Verbindung - vorzugsweise einer Gleitverbindung - zu einer Vorrichtung zum Zerkleinern von Nahrungsmitteln - insbesondere zu einer Reibe oder einem Hobel - geeignet sind, und mit einem Schachtelement, in das zu zerkleinernde Nahrungsmittel einführbar und einer mit dem Halter verbindbaren Vorrichtung zum Zerkleinern von Nahrungsmitteln zuführbar sind.

DE 2816929 offenbart eine Vorrichtung zum Zerkleinern von Nahrungsmitteln bestehend aus einer mit einem Handgriff versehenen länglichen Grundplatte, über deren Oberfläche das zu zerkleinernde Gut von Hand hin- und herbewegbar ist. Im mittleren Bereich weist die Vorrichtung ein austauschbares Zerkleinerungsblech auf. Die DE 2816929 offenbart auch einen Restehalter, der, das zu zerkleinernde Gut haltend, auf der Grundplatte hin und her bewegt werden kann. DE 329251 offenbart eine vorrichtung gemäß dem Oberbegriff von Anspruch 1.

Gelegentlich ist es von Vorteil, eine Vorrichtung zum Zerkleinern von Nahrungsmitteln, beispielsweise eine Reibe, schräggestellt, d.h. unter einem von 0 Grad verschienenen Winkel zur Tischplatte, auf der ein Ende der Vorrichtung aufliegt, zu verwenden. Leider Verrutscht hierbei die Vorrichtung beim Zuführen des zu zerkleinernden Gutes und bei gleichzeitiger Ausführung der Schneidbewegung (Hin-und-her-Bewegung) oft unkontrolliert über die Tischplatte, was das Schneidergebnis negativ beeinflusst.

Der Erfindung liegt daher die Aufgabe zugrunde, eine einen Halter anzugeben, der ein Umherrutschen einer Schräg zur Waagerechten gestellten Vorrichtung zum Zerkleinern von Nahrungsmittel mit der er verwendet wird, weitgehend vermeidet.

Die Aufgabe wird durch eine Vorrichtung mit den Merkmalen des kennzeichens von Anspruch 1 gelöst.

Die aus dem Stand der Technik bekannten Restehalter weisen einen zur Grundebene - und damit zur Verschiebeachse der Hin-und-her-Bewegung - senkrecht angeordneten Schacht auf. Der Benutzer muss folglich zwei Kräfte ausüben: einerseits muss er das zu schneidende Gut in den Halter drücken und andererseits muss er - senkrecht dazu - den Halter über die Gleitbahn verschieben. Dies stellt hohe Anforderungen an die Koordination des Benutzers und führt in der Regel zu unkontrollierbaren Rutschbewegungen.

Die Erfindung hat den Vorteil, dass der Benutzer nur noch in eine Richtung, vorzugsweise entlang der Senkrechten drücken muss, wobei gleichzeitig das zu schneidende gut in den Halter gedrückt wird und der Halter über die Vorrichtung zum Zerkleinern von Nahrungsmitteln geschoben wird. Die Aufteilung der vom Benutzer ausgeübten Kraft in die erforderlichen zwei Kräfte erfolgt automatisch. Der Benutzer muss lediglich von oben nach unten drücken und waagerecht gerichteten Kräfte mehr ausüben. Was die waagerechte Bewegung angeht, wird die Hand des Benutzers gewissermaßen von dem Halter geführt.

Vorzugsweise weist das Schachtelement und/oder die Wandung des Schachtelements einen von 90 Grad verschiedenen Winkel zur Grundebene, insbesondere einen Winkel im Bereich von 30 bis 60 Grad, insbesondere von 45 Grad zur Grundebene auf. Als Aufsetzelement kann beispielsweise eine oder mehrer Gleitflächen dienen, die beispielsweise auf Führungsschienen einer Vorrichtung zum Zerkleinern von Nahrungsmitteln aufliegen. Das Aufsetzelement beispielsweise auch Räder und/oder Rollen und/oder Anschlagelemente und/oder Führungselemente beinhalten. Vorzugsweise ist die Grundebene parallel zu der Gleitbahn der Vorrichtung ausgerichtet, mit der der Halter zusammen verwendet wird..

Vorzugsweise ist der Winkel des Schachtelement zur Grundebene einstellbar ist und damit individuell der Neigung der eingesetzten Reibe anpassbar.

In einer besonders bevorzugten Ausgestaltungsform weist das Schachtelement einen von der Kreisform verschiedenen - vorzugsweise einen polygonförmigen - Querschnitt auf. Besonders bevorzugt ist ein Schachtelement mit einem dreieckigen Querschnitt. Das Dreieck kann vorteilhafter Weise ungleichseitig ausgebildet sein, wodurch eine besonders gute Führung des zu schneidenden Gutes in dem Halter erreicht wird.

Das Schachtelement weist in einer anderen Variante einen ovalen und/oder elliptischen Querschnitt auf. Vorzugsweise steht die große Längsachse des ovalen und/oder elliptischen Querschnitts des Schachtelements in der Projektion auf die Grundebene einen von Null Grad verschiedenen Winkel zur Arbeitsbewegungsachse bezüglich der Zerkleinerungsbewegung. Durch diese Schrägstellung wird das zu schneidende Gut besonders sauber und und gut fixiert über die Schneidmesser einer Vorrichtung zum Zerkleinern von Lebensmitteln - insbesondere Reibe und/oder Hobel - geführt.

In einer besonders bevorzugten Variante ist das Schachtelement relativ zu den Aufsetzelementen drehbar gelagert ist. Hierdurch kann man den Halter der Form des zu schneidenden Gutes anpassen. Vorzugsweise ist ein Mittel zum Fixieren einer gewählten Drehstellung vorgesehen.

In einer Ausgestaltungsvariante weist das Aufsetzelement zumindest ein Führungselement auf, das mit Führungselementen einer Vorrichtung zum Zerkleinern von Lebensmitteln - insbesondere einer Reibe und/oder einem Hobel - mechanisch verkoppelbar ist. Vorzugsweise ist der Halter in eine Führung einer Vorrichtung zum Zerkleinern von Lebensmitteln - insbesondere einer Reibe und/oder einem Hobel - senkrecht zur Arbeitsbewegungsachse bezüglich der Zerkleinerungsbewegung einrastbar. Hierdurch ist vermieden, dass der Halter umständlich an den Enden der zu verwendenden Reibe eingeschoben werden muss.

Vorzugsweise ist zumindest ein Festlegmittel vorgesehen, mit dem der Halter an einer Vorrichtung zum Zerkleinern von Lebensmitteln - insbesondere einer Reibe und/oder einem Hobel - lösbar festlegbar ist. Das Festlegmittel kann zumindest Teile einer Rastverbindung und/oder einer Einhakverbindung aufweisen. Hierdurch kann das Halter auf einfache Weise zusammen mit der Vorrichtung zum Zerkleinern von Lebensmitteln - insbesondere Reibe und/oder Hobel - verstaut werden.

Der Halter und die zu verwendende Vorrichtung zum Zerkleinern von Lebensmitteln - insbesondere Reibe und/oder Hobel - in Bezug auf Winkel und/oder Führung aufeinander abgestimmt.

Die Vorrichtung zum Zerkleinern von Lebensmitteln weist eine Gleitbahn auf, auf der zum Ausführen eines Zerkleinerungsvorganges ein zu zerkleinerndes Gut verschiebbar ist. In einer besonderen Ausführungsform Erfindungsgemäß ist eine Standvorrichtung zum Aufstellen der Vorrichtung auf eine Tischfläche, wobei die Gleitbahn einen von Null Grad verschiedenen Aufstellwinkel zur Tischfläche aufweist, vorgesehen. Weiterhin weist das Schachtelement einen dem Aufstellwinkel entsprechenden Winkel (und/oder einen Winkel von 90 Grad plus dem Aufstellwinkel) zur Grundebene und/oder zur Gleitbahn auf.

Besonders vorteilhafter Weise ist das Schachtelement senkrecht zur Waagerechten angeordnet ist, weil hierbei vom Benutzer nur eine Kraft senkrecht zur Tischfläche ausgeübt werden muss.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: eine erfindungsgemäße Vorrichtung zum Zerkleinern von Nahrungsmitteln mit einem aufgesetzten Halter,
- Fig. 2: eine weiter erfindungsgemäße Vorrichtung zum Zerkleinern von Nahrungsmitteln mit einem aufgesetzten Halter,
- Fig.3: die weitere erfindungsgemäße Vorrichtung zum Zerkleinern von Nahrungsmitteln mit einem aufgesetzten Halter aus einer Seitenansicht,
- Fig.4: einen Halter mit einem Nachdrückstempel,
- Fig. 5: den Halter mit eingeführtem Nachdrückstempel, und

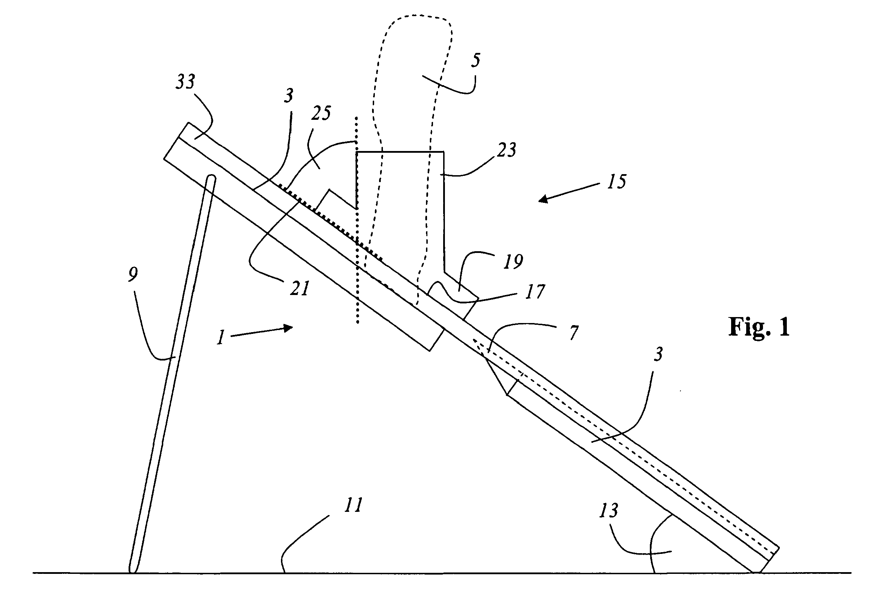

Fig. 1 zeigt eine Vorrichtung 1 zum Zerkleinern von Nahrungsmitteln mit einer Gleitbahn 3, auf der zum Ausführen eines Zerkleinerungsvorganges ein zu zerkleinerndes Gut 5 verschiebbar ist, und mit einem Schneidmesser 7. Die Vorrichtung weist einen Ständerbügel 9 zum Aufstellen der Vorrichtung auf einer Tischfläche 11 unter einem Aufstellwinkel 13 auf. Auf die Vorrichtung 1 zum Zerkleinern von Nahrungsmitteln ist ein Halter 15 mit einem eine Gleitfläche 17 aufweisenden Aufsetzelement 19, das eine Grundebene 21 definiert und zur Herstellung einer mechanischen einer Gleitverbindung zu der Vorrichtung 1 zum Zerkleinern von Nahrungsmitteln dient. Vorrichtung 1 zum Zerkleinern von Nahrungsmitteln ist mit Gleitführungsschienen 33 ausgerüstet, auf denen die Gleitflächen 17 bei der Schneidbewegung (Hin-und-her-Bewegung) gleiten. Der Halter weist ein Schachtelement 23 auf, in das das zu zerkleinernde Gut 5 einführbar und der Vorrichtung 1 zum Zerkleinern von Nahrungsmitteln zuführbar ist. Das Schachtelement 23 weist einen von 90 Grad verschiedenen Winkel 25, nämlich einen dem Aufstellwinkel 13 entsprechenden Winkel, zur Grundebene 21 auf. Zum Ausführen der Schneidbewegung muss lediglich ein nach unten gerichteter Druck auf das zu zerkleinernde Gut 5 aufgeübt werden.

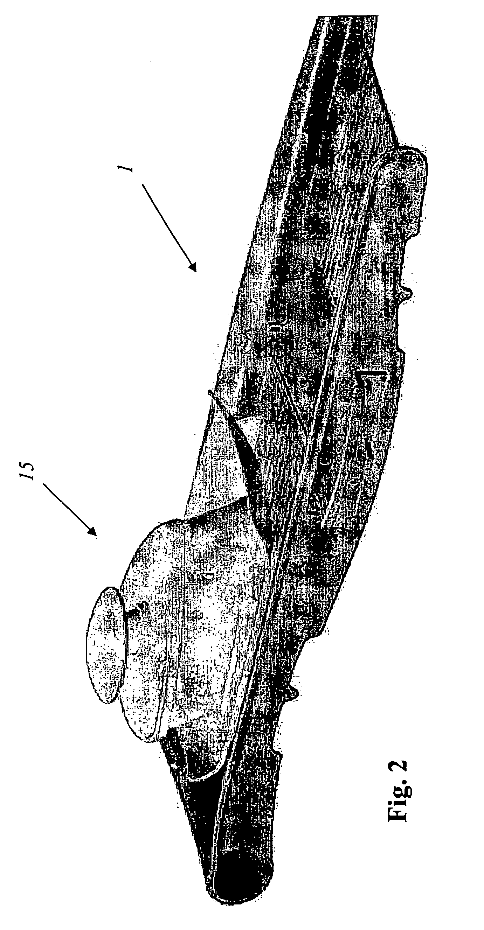

Fig. 2 zeigt eine weiter Vorrichtung 1 zum Zerkleinern von Nahrungsmitteln mit einem aufgesetzten erfindungsgemäßen Halter 15. Der Querschnitt des Halters 15 weist die Form eines gleichschenkligen Dreiecks auf.

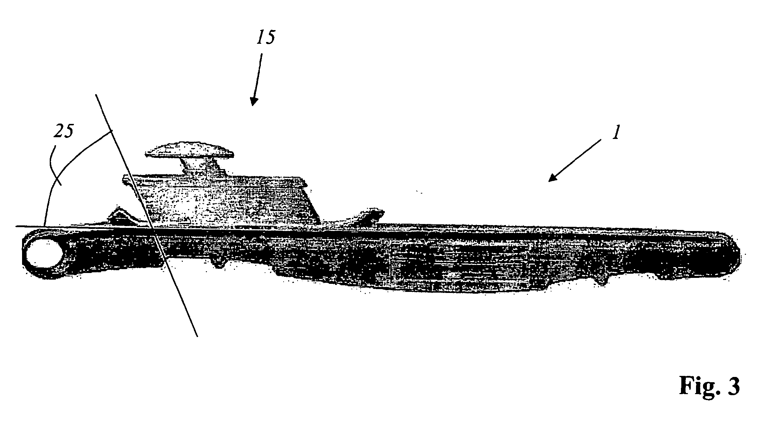

Fig. 3 zeigt die weitere Vorrichtung 1 zum Zerkleinern von Nahrungsmitteln mit einem aufgesetzten erfindungsgemäßen Halter 15 aus einer Seitenansicht.

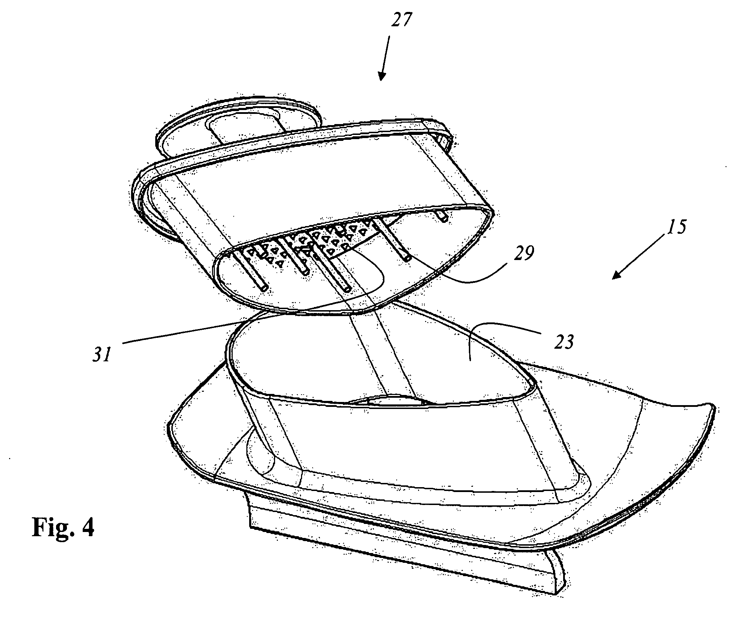

Fig. 4 zeigt einen erfindungsgemäßen Halter 15 mit einem Schachtelement 23 mit Aufsetzelemente 19 und mit einem Nachdrückstempel 27, der Andrückvorsprünge 31 und Aufspießstifte 29 aufweist.

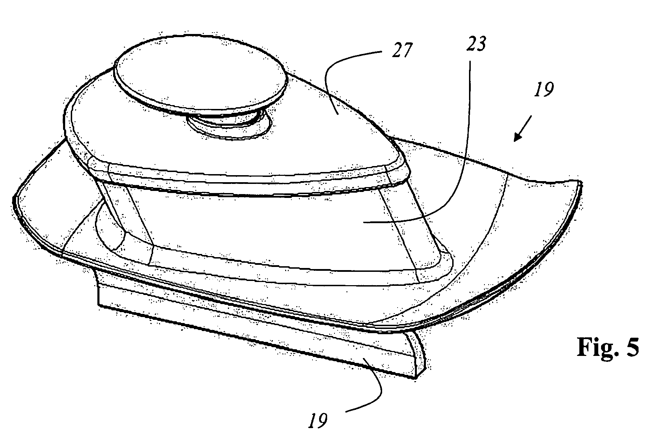

Fig. 5 zeigt den bezüglich Fig. 4 beschriebenen Halter 15 bei eingeführtem Nachdrückstempel 27.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Vorrichtung zum Zerkleinern von Nahrungsmitteln
- 3: Gleitbahn
- 5: zu zerkleinerndes Gut
- 7: Schneidmesser
- 9: Ständerbügel
- 11: Tischfläche
- 13: Aufstellwinkel
- 15: Halter
- 17: Gleitfläche
- 19: Aufsetzelement
- 21: Grundebene
- 23: Schachtelement
- 25: Winkel
- 27: Nachdrückstempel
- 29: Aufspießstifte
- 31: Andrückvorsprünge
- 33: Gleitführungsschienen

## Patentansprüche

1. Vorrichtung zum Zerkleinern von Nahrungsmitteln (1) - insbesondere Reibe und/oder Hobel - mit einer Gleitbahn (3), auf der zum Ausführen eines Zerkleinerungsvorganges ein zu zerkleinerndes Gut (5) verschiebbar ist und mit einem Halter (15) für die Nahrungsmittel, mit zumindest einem Aufsetzelement (19),
das eine Grundebene (21) definiert und zur Herstellung einer mechanischen Verbindung - vorzugsweise einer Gleitverbindung - zwischen Halter (15) und Gleitbahn (3) geeignet ist, und mit einem Schachtelement (23), in das zu zerkleinernde Nahrungsmittel einführbar und der Vorrichtung zuführbar sind, wobei das Schachtelement (23) einen von 90 Grad verschiedenen Winkel (25) zur Grundebene (21) aufweist,
**dadurch gekennzeichnet, dass** eine Standvorrichtung zum Aufstellen der Vorrichtung auf einer Tischfläche (11) vorgesehen ist, wobei die Gleitbahn (3) einen von 0 Grad verschiedenen Aufstellwinkel (13) zur Tischfläche (11) aufweist und wobei das Schachtelement (23) einen dem Aufstellwinkel (13) entsprechenden Winkel (25) zur Grundebene (21) und/oder zur Gleitbahn (3) aufweist, so dass zum Ausführen der Schneidbewegung lediglich eine nach unten gerichtete Kraft auf das zu zerkleinernde Gut auszuüben ist.

2. Vorrichtung nach Anspruch 1 **dadurch gekennzeichnet, dass** der Winkel des Schachtelement (23) zur Grundebene (21) einstellbar ist.

3. Vorrichtung nach Anspruch 1 oder 2, **dadurch gekennzeichnet, dass** das Schachtelement (23) einen von der Kreisform verschiedenen Querschnitt aufweist, vorzugsweise einen
polygonförmigen Querschnitt oder
einen dreieckigen Querschnitt oder
einen ovalen und/oder elliptischen Querschnitt aufweist, wobei das Aufsetzelement (19) eine Arbeitsbewegungsachse bezüglich der Zerkleinerungsbewegung festlegt und dass die große Längsachse des ovalen und/oder elliptischen Querschnitts des Schachtelements (23) in der Projektion auf die Grundebene (21) einen von Null Grad verschiedenen Winkel zur Arbeitsbewegungsachse aufweist.

4. Vorrichtung nach Anspruch 3, **dadurch gekennzeichnet, dass** das Aufsetzelement (19) eine Arbeitsbewegungsachse bezüglich der Zerkleinerungsbewegung festlegt und dass das Schachtelement (23) Schräg zur Arbeitsbewegungsachse angeordnet ist.

5. Vorrichtung nach einem der Ansprüche 1 bis 4 **dadurch gekennzeichnet, dass** das Schachtelement (23) relativ zu den Aufsetzelementen (19) drehbar gelagert ist, wobei
ein Mittel zum Fixieren einer gewählten Drehstellung vorgesehen sein kann.

6. Vorrichtung nach einem der Ansprüche 1 bis 5, **dadurch gekennzeichnet, dass** das Aufsetzelement (19) zumindest ein Führungselement aufweist, das mit Führungselementen einer Vorrichtung zum Zerkleinern von Lebensmitteln - insbesondere einer Reibe und/oder einem Hobel - mechanisch verkoppelbar ist.

7. Vorrichtung nach einem der Ansprüche 1 bis 6, **dadurch gekennzeichnet, dass** der Halter (15) in eine Führung einer Vorrichtung zum Zerkleinern von Lebensmitteln - insbesondere einer Reibe und/oder einem Hobel - senkrecht zur Arbeitsbewegungsachse bezüglich der Zerkleinerungsbewegung einrastbar ist.

8. Vorrichtung nach einem der Ansprüche 1 bis 7, **dadurch gekennzeichnet, dass** zumindest ein Festlegmittel vorgesehen sind, mit dem der Halter an einer Vorrichtung zum Zerkleinern von Lebensmitteln - insbesondere einer Reibe und/oder einem Hobel - lösbar festlegbar ist, wobei
das Festlegmittel zumindest Teile einer Rastverbindung und/oder einer Einhakverbindung aufweisen kann.

## Claims

1. A device for chopping food (1), in particular a grater and/or slicer, comprising a sliding guide (3), on which an item (5), which is to be chopped, can be displaced for carrying out a chopping process and comprising a holder (15) for the food, comprising at least one attachment element (19), which defines a base plane (21) and which is suitable for establishing a mechanical connection, preferably a sliding connection, between holder (15) and sliding guide (3), and comprising a box-shaped element (23), into which the food, which is to be chopped, can be inserted and supplied to the device, wherein the box-shaped element (23) encompasses an angle (25) to the base plane (21), which differs from 90°,
**characterized in that** provision is made for a stand device for setting up the device on a table surface (11), wherein the sliding guide (3) encompasses a set-up angle (13) to the table surface (11), which differs from 0 degrees and wherein the box-shaped element (23) encompasses an angle (25) to the base plane (21) and/or to the sliding guide (3), which corresponds to the set-up angle (13), so that only a force, which is directed downwards, must be exerted onto the item, which is to be chopped, for carrying out the cutting motion.

2. The device according to claim 1, **characterized in that** the angle of the box-shaped element (23) can be adjusted to the base plane (21).

3. The device according to claim 1 or 2, **characterized in that** the box-shaped element (23) encompasses a cross section, which differs from the circular design, preferably a
polygonal cross section or
a triangular cross section or
an oval and/or elliptical cross section, wherein
the attachment element (19) defines a working motion axis relative to the chopping motion and that the large longitudinal axis of the oval and/or elliptical cross section of the box-shaped element (23) encompasses an angle, which differs from zero degrees on the base plane (21) to the working motion axis.

4. The device according to claim 3, **characterized in that** the attachment element (19) defines a working motion axis relative to the chopping motion and that the box-shaped element (23) is arranged diagonally to a working motion axis.

5. The device according to one of claim 1 to 4, **characterized in that** the box-shaped element (23) is supported so as to be rotatable relative to the attachment elements (13), wherein provision can be made for a means for fixing a chosen rotary position.

6. The device according to one of claims 1 to 5, **characterized in that** the attachment element (19) encompasses at least one guide element, which can be coupled mechanically to guide elements of a device for chopping food, in particular a grater and/or a slicer.

7. The device according to one of claims 1 to 6, **characterized in that** the holder (15) can be engaged with a device for chopping food, in particular a grater and/or a slicer, vertically to the working motion axis relative to the chopping motion.

8. The device according to one of claims 1 to 7, **characterized in that** provision is made for at least one defining means, by means of which the holder can be attached to a device for chopping food, in particular a grater and/or a slicer, so as to be capable of being detached, wherein
the defining means can encompass at least parts of a snap-in connection and/or of a hook connection.

## Revendications

1. Dispositif pour fractionner des aliments (1) (notamment râpe et/ou rabot) avec une surface de glissement (3) sur laquelle pour réaliser un processus de fractionnement, un produit (5) à fractionner peut être déplacé et avec un support (15) pour les aliments, avec au moins un élément à poser (19) qui définit un plan de base (21) et qui est adapté pour assurer une liaison mécanique entre le support (15) et la surface de glissement (3) et avec un élément en cheminée (23) dans lequel l'aliment à fractionner peut être introduit et amené vers le dispositif, l'élément en cheminée (23) présentant un angle (25) différent de 90 degrés par rapport au plan de base.

2. Dispositif selon la revendication 1, **caractérisé en ce que** l'angle de l'élément en cheminée (23) par rapport au plan de base (21) est réglable.

3. Dispositif selon la revendication 1 ou 2, **caractérisé en ce que** l'élément en cheminée (23) présente une section transversale différente de la forme circulaire, de préférence une
section transversale polygonale ou
une section transversale triangulaire ou
une section transversale ovale et/ou elliptique,
l'élément à poser (19) définissant un axe de déplacement en travail pour le mouvement de fractionnement et **en ce que** le grand axe longitudinal de la section transversale ovale et/ou elliptique de l'élément en cheminée (23) présente en projection sur le plan de base (21) un angle différent de zéro degré par rapport à l'axe de déplacement en travail.

4. Dispositif selon la revendication 3, **caractérisé en ce que** l'élément à poser (19) définit un axe de déplacement en travail pour le mouvement de fractionnement et **en ce que** l'élément en cheminée (23) est disposé en inclinaison par rapport à l'axe de déplacement en travail.

5. Dispositif selon l'une quelconque des revendications 1 à 4, **caractérisé en ce que** l'élément en cheminée (23) est logé en rotation par rapport aux éléments à poser (19),
un moyen pour fixer une position en rotation choisie pouvant être prévu.

6. Dispositif selon l'une quelconque des revendications 1 à 5, **caractérisé en ce que** l'élément à poser (19) comporte au moins un élément de guidage qui est susceptible d'être accouplé mécaniquement à des éléments de guidage d'un dispositif de fractionnement d'aliments (notamment une râpe et/ou un rabot).

7. Dispositif selon l'une quelconque des revendications 1 à 6, **caractérisé en ce que** le support (15) est susceptible de s'enclencher dans un guidage d'un dispositif de fractionnement d'aliments (notamment une râpe et/ou un rabot), à la perpendiculaire du déplacement en travail pour le mouvement de fractionnement.

8. Dispositif selon l'une quelconque des revendications 1 à 7, **caractérisé en ce qu'**il est prévu au moins un moyen d'immobilisation, à l'aide duquel le support est susceptible d'être immobilisé de façon amovible sur un dispositif de fractionnement d'aliments (notamment une râpe et/ou un rabot),
le moyen d'immobilisation pouvant comporter au moins des parties d'une liaison par enclenchement et/ou d'une liaison par accrochage.
